(19) **Europäisches Patentamt**

**European Patent Office**

**Office européen des brevets**

(11) **EP 0 642 075 B1**

(12) **FASCICULE DE BREVET EUROPEEN**

(45) Date de publication et mention
de la délivrance du brevet:
**07.11.2001  Bulletin 2001/45**

(51) Int Cl.⁷: **G06F 3/023**, G06K 11/18

(21) Numéro de dépôt: **94401877.9**

(22) Date de dépôt: **19.08.1994**

(54) **Procédé et dispositif pour la gestion des déplacements relatifs d'un curseur par rapport à l'image affichée sur un dispositif de visualisation**

Verfahren und Vorrichtung zur Verwaltung von relativen Kursorverschiebungen hinsichtlich des auf der Bildanzeigevorrichtung dargestellten Bildes

Method and apparatus for the management of relative displacements of the cursor with respect to the image displayed on the display device

(84) Etats contractants désignés:
**DE GB IT NL**

(30) Priorité: **02.09.1993  FR 9310550**

(43) Date de publication de la demande:
**08.03.1995  Bulletin 1995/10**

(73) Titulaire: **SEXTANT AVIONIQUE**
**92366 Meudon la Forêt Cédex (FR)**

(72) Inventeurs:
• **Gaultier, Philippe**
  **F-78150 Le Chesnay (FR)**
• **Vouillon, Patrick**
  **F-91140 Villebon sur Yvette (FR)**

• **Debrus, Marie-Helene**
  **45260 Lorris (FR)**

(74) Mandataire: **de Saint-Palais, Arnaud Marie**
**CABINET MOUTARD**
**35 Rue de la Paroisse**
**BP 513**
**78005 Versailles Cedex (FR)**

(56) Documents cités:
**EP-A- 0 056 315          US-A- 4 975 689**

• **PATENT ABSTRACTS OF JAPAN vol. 016, no. 139 (P-1334)8 Avril 1992 & JP-A-04 000 523 (MITSUBISHI ELECTRIC CORP.) 6 Janvier 1992**

EP 0 642 075 B1

## Description

La présente invention concerne un procédé et un dispositif pour la gestion des déplacements relatifs d'un curseur sur un dispositif de visualisation par rapport à une image dont on affiche au moins une partie sur ce dispositif.

D'une manière générale, on sait que les dialogues homme/processeur font de plus en plus fréquemment intervenir l'affichage à l'écran d'un curseur que l'opérateur doit déplacer pour désigner des emplacements de l'écran représentatifs de données que l'on veut saisir ou même de fonctions que l'on veut réaliser.

De nombreuses solutions ont donc été proposées pour permettre à l'opérateur de commander les déplacements du curseur et pour valider les emplacements désignés par ce dernier.

Or, parmi ces solutions, celles qui sont les plus répandues à l'heure actuelle telles que les touches de direction prévues sur le clavier affecté au processeur, les "souris" ou les "trackballs" (ou "thumball") ne conviennent pas bien ou même sont prohibés dans certaines applications, notamment dans le cas de terminaux de dialogue équipant les postes de pilotage d'aérodynes.

Ainsi, la souris exige pour son fonctionnement une grande surface plane, horizontale, incompatible avec l'environnement des postes de pilotage.

Le "trackball" qui fait intervenir une sphère que l'opérateur fait tourner du doigt, est un outil difficile à rendre étanche et, en conséquence, difficile à intégrer dans un cockpit. En outre, il s'avère peu pratique et manque de précision.

Les touches de direction du clavier ne sont pas ergonomiques et ne permettent des déplacements du curseur que selon quatre axes seulement.

Pour supprimer ces inconvénients, on a également proposé des tablettes tactiles aptes à détecter les déplacements d'un doigt de l'opérateur pour guider le curseur affiché à l'écran.

Toutefois, ces tablettes tactiles qui sont, au demeurant très performantes, présentent l'inconvénient de nécessiter une surface utile relativement importante.

L'invention a donc plus particulièrement pour but de supprimer ces inconvénients grâce à un procédé pouvant faire intervenir un interface homme/machine de dimensions réduites, manoeuvrable quelle que soit l'orientation de la main, et permettant cependant d'obtenir une grande précision des sélections et des tracés. Ce procédé convient tout aussi bien pour des déplacements relatifs de type "curseur mobile/image fixe" que de type "curseur fixe/image mobile".

Pour parvenir à ces résultats, dans le but de commander un déplacement relatif du curseur par rapport à l'image et d'amener ainsi ce curseur dans une zone déterminée de cette image, ce procédé comprend un mode de déplacement comportant les étapes suivantes :

- la détermination et l'indication à l'écran de la direction et du sens du déplacement relatif que l'on veut réaliser, cette étape étant exécutée en faisant varier l'orientation de l'index par une première action de commande manuelle jusqu'à ce qu'elle corresponde à la direction souhaitée,
- le déplacement relatif du curseur par rapport à l'image, dans la direction et selon le sens ainsi déterminés jusqu'à ce qu'il parvienne dans ladite zone, ce déplacement étant effectué par une deuxième action de commande distincte de la première,
- la validation de la position occupée par le curseur relativement à l'image, par une troisième action de commande distincte de la première.

Avantageusement, la première action de commande pourra consister en l'entraînement en rotation d'un organe de commande rotatif dont le pivotement entraîne celui de l'axe affiché à l'écran.

De même, les deuxième et troisième actions de commande pourront consister en des pressions exercées sur l'organe de commande, inférieures à un seuil de pression prédéterminé pour ce qui concerne la deuxième action et supérieure audit seuil pour la troisième action.

Le procédé selon l'invention peut en outre comprendre une étape préalable de sélection de mode de fonctionnement, et une étape d'initialisation du mode déplacement du curseur, cette étape d'initialisation étant déclenchée par la détection de la présence d'un doigt de l'opérateur, sur ou à proximité de l'organe de commande.

Bien entendu, l'invention concerne également un dispositif pour la mise en oeuvre du procédé précédemment décrit, ce dispositif comprenant :

- un élément de commande monté rotatif sur une structure fixe,
- des moyens permettant de détecter la position angulaire de l'élément de commande et d'élaborer un signal numérique représentatif de cette position angulaire,
- un processeur associé à un dispositif d'affichage comprenant un écran, ce processeur recevant le susdit signal numérique,
- des moyens permettant d'afficher à l'écran un curseur pouvant pivoter autour de l'un de ses points de manière à indiquer une direction et un sens en correspondance avec la position angulaire de l'élément de commande,
- des moyens aptes à détecter une pression exercée sur l'élément de commande, et pour transmettre au processeur un signal de commande, lorsque la pression détectée s'élève au-delà d'un seuil prédéterminé,
- des moyens permettant d'effectuer en réponse au signal de commande un déplacement relatif curseur/image selon ladite direction et ledit sens,

- des moyens aptes à transmettre au processeur un signal de validation en réponse à une action de l'opérateur sur un organe de validation, ce signal de validation déclenchant une prise en compte par le processeur de la position du curseur.

Un mode d'exécution de l'invention sera décrit ci-après, à titre d'exemple non limitatif, avec référence aux dessins annexés dans lesquels :

La figure 1 est une représentation schématique d'un dispositif selon l'invention faisant intervenir un terminal de gestion de curseur représenté en coupe axiale verticale ;

La figure 2 est une vue de dessus du terminal représenté sur la figure 1 ; Les figures 3, 4 et 5 sont des représentations schématiques de l'écran qui permettent d'illustrer différents modes de fonctionnement du dispositif ;

Les figures 6 et 7 sont des vues schématiques en coupe axiale de deux variantes d'exécution du terminal ;

Les figures 8 à 11 sont des représentations schématiques d'un écran permettant d'illustrer une séquence de commande de défilement multidirectionnel d'une image ;

Les figures 12 à 17 sont des représentations schématiques d'un écran permettant d'illustrer une séquence de tracé d'une route que doit suivre un véhicule tel que, par exemple, un aéronef.

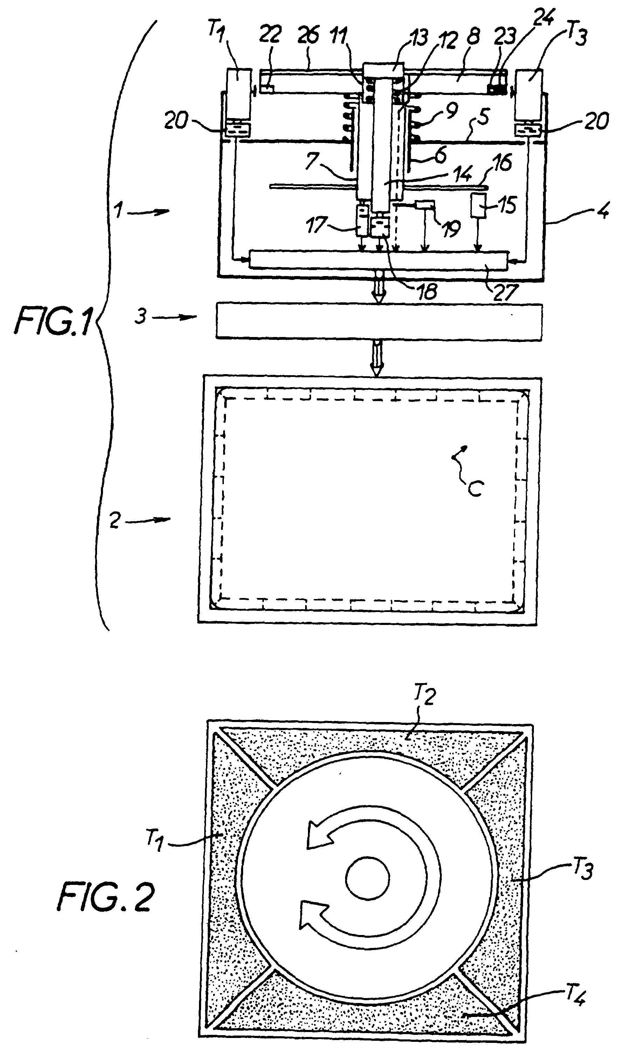

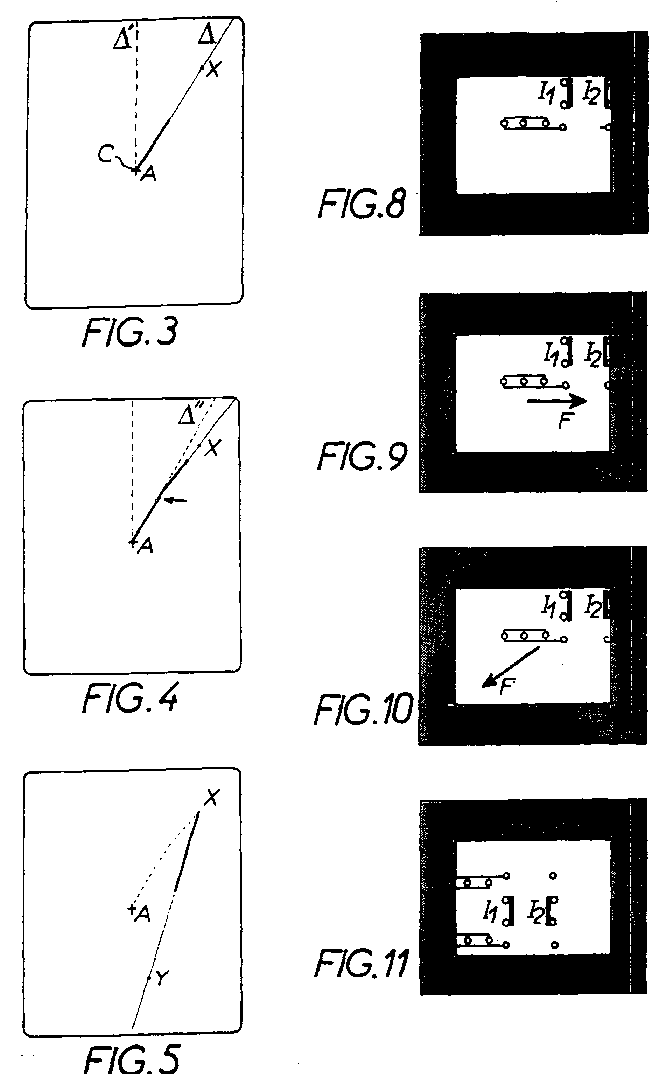

Dans l'exemple représenté sur la figure 1, le terminal 1 est destiné à assurer la gestion d'un curseur C affiché sur l'écran 2 d'un dispositif d'affichage associé à un processeur 3.

Ce terminal comprend un boîtier 4, de forme parallélépipédique dont la face supérieure 5 5 est munie d'un palier central vertical 6 dans lequel peut pivoter et coulisser axialement un arbre rotatif tubulaire 7.

Cet arbre rotatif 7 porte, à son extrémité supérieure, un disque rotatif 8 qui s'étend parallèlement à la face supérieure 5.

Le maintien en position axiale de l'ensemble arbre 7-disque 8 est assuré par un ressort de compression 9 disposé coaxialement entre la face supérieure 5 et le disque 8.

Le disque 8 comprend, par ailleurs, une cavité centrale coaxiale 11 qui communique avec le volume intérieur de l'arbre tubulaire 7, et dans laquelle est monté coulissant, avec rappel par ressort 12, un poussoir coaxial 13 solidaire d'une tige 14.

Par ailleurs, le boîtier 4 renferme :

- un détecteur 15 disposé en regard d'une roue codeuse 16 portée par l'arbre tubulaire 7, coaxialement à celui-ci,

- un micro-interrupteur 17 disposé sous l'arbre tubulaire 7 de manière à être actionné par celui-ci lorsqu'à la suite d'une pression exercée sur le disque 8 l'arbre 7 se déplace vers le bas contre l'action du ressort 9, au-delà d'une course prédéterminée,

- un micro-interrupteur 18 disposé sous l'extrémité de la tige 14 qui ressort de l'extrémité inférieure de l'arbre tubulaire 7, de manière à être actionné à la suite d'une pression exercé sur le poussoir 13, et

- une jauge de contrainte optionnelle 19, placée en parallèle ou en remplacement de l'interrupteur 17, de manière à obtenir un signal proportionnel à la force exercée sur le disque 8.

Dans cet exemple, la face supérieure 5 du boîtier 4 supporte quatre touches de fonction $T_1$ à $T_4$, de forme trapézoïdale, avec la petite base incurvée, qui occupent l'espace compris entre le disque 8 et les bords latéraux du boîtier 4. Ces touches de fonction $T_1$ à $T_4$ agissent sur des interrupteurs respectifs 20 montés sur la face supérieure 5.

La surface cylindrique du disque 8 est munie d'une piste crantée 22 sur laquelle vient porter une bille 23 sollicitée par un ressort 24 en appui sur le boîtier 4, de manière à engendrer une sensation tactile lors de l'entraînement en rotation du disque 8.

La face supérieure du disque 8 peut être recouverte d'une couche tactile 26 apte à déceler la présence d'un doigt ou d'une main à proximité immédiate du disque 8, voire même un effleurement de ce dernier.

Les interrupteurs 17, 18, 20, le détecteur 15, la jauge de contrainte 19 et la surface tactile 26, sont connectés à un circuit d'interface 27 qui assure une mise en forme des signaux délivrés par ces éléments et les transmet sous une forme numérique appropriée, au processeur 3.

Tel que précédemment décrit, le terminal 1 permet d'exécuter une multiplicité de fonctions, telles que notamment un déplacement du curseur vers un point à atteindre, avec ou sans visualisation du tracé, le relevé d'un cap et/ou de la distance du curseur à un point singulier, etc...

Lorsque l'opérateur désire déplacer le curseur du point A où il se trouve, vers un point X, il sélecte tout d'abord le mode de fonctionnement correspondant en exerçant une pression sur une touche 20 puis il pose ses doigts sur le disque 8. La couche tactile 26 détecte la présence des doigts et en informe le processeur 3 qui procède alors à l'affichage d'un axe $\Delta'$ (en traits interrompus) passant par le centre du curseur C et présentant la dernière orientation donnée à ce dernier. Avantageusement, le curseur pourra présenter la forme d'une flèche colinéaire à l'axe $\Delta$ et mobile en rotation avec celui-ci, autour d'un même point (centre 0).

L'opérateur fait alors pivoter le disque 8, pivotement dont les données angulaires sont transmises au processeur 3 par le détecteur 15 qui, à son tour, provoque un pivotement de l'axe autour du centre 0 (choix de la direction et du sens de déplacement du curseur).

Bien entendu, l'opérateur poursuit son pivotement jusqu'à ce que l'axe Δ passe par le point à atteindre X.

L'opérateur exerce alors un appui sur le disque 8 de manière à provoquer une commutation de l'interrupteur 17. Celui-ci émet un signal en direction du processeur 3 qui commande un déplacement du curseur C le long de l'axe Δ, en direction du point X à atteindre.

Dans le cas où l'on utilise la jauge de contrainte 19, la vitesse de déplacement du curseur C peut être rendue proportionnelle à l'effort exercé sur le disque 8 (à chaque valeur de l'effort détecté par la jauge 19 peut correspondre une valeur déterminée de la vitesse d'avance).

Une fois que le curseur C a atteint le point X recherché, l'opérateur peut appuyer sur le poussoir 13 pour provoquer une commutation de l'interrupteur 18 et, en conséquence, la validation de la position du curseur C. Cette validation peut se traduire par une prise en compte des coordonnées du curseur C par le processeur 3, par une singularisation du point X à l'écran et, éventuellement, par l'effacement de l'axe Δ.

Bien entendu, en sélectionnant un mode graphique, par exemple par une action sur une touche 20, il est possible de visualiser, d'une façon persistante, les déplacements du curseur C. Dans ce cas, ce tracé se maintiendra à la suite de l'effacement de l'axe Δ.

La figure 3, qui illustre le processus précédemment décrit, montre la visualisation à l'écran du trajet du curseur de la position initiale A vers le point X sur l'axe Δ (la direction initiale Δ' de cet axe Δ étant indiquée en traits interrompus).

Toutefois, le mode opératoire utilisé dans cet exemple n'est pas unique : Il serait possible dans un premier temps d'orienter grossièrement l'axe Δ" comme représenté figure 4 en traits interrompus, puis de procéder ensuite à un ou plusieurs changements de direction pour atteindre le point X.

Ce changement de direction peut être effectué en tournant le disque 8, avec ou sans interruption du déplacement du curseur, c'est-à-dire avec ou sans pression sur le disque 8.

Il apparaît clairement qu'en combinant la pression et la rotation du disque 8, il est possible d'obtenir des trajets du curseur de forme courbe, voire même circulaire.

A partir du point X, le curseur C peut être amené à un point Y d'une façon analogue à celle précédemment décrite (figure 5).

En raison de ses particularités, le terminal précédemment décrit offre de nombreuses possibilités.

Il permet, par exemple, de définir le cap que doit suivre le curseur pour parvenir au point recherché ainsi que la distance séparant le curseur de ce point, ces informations pouvant être affichées à l'écran une fois que l'axe lié au curseur a été orienté de manière à passer par ce point et que cette orientation a été validée.

Il permet d'effectuer des sélections rapides de plages de commande, disposées par exemple autour de l'écran (par exemple de la façon indiquée en traits interrompus sur la figure 7), en procédant simplement à une orientation de l'axe lié au curseur C de manière à ce qu'il passe par la plage choisie et en validant l'orientation correspondante (sans devoir nécessairement déplacer le curseur le long de l'axe Δ).

Il permet, en outre, d'incrémenter ou de décrémenter une valeur si le point validé est un compteur.

Bien entendu, l'invention ne se limite pas au mode d'exécution précédemment décrit.

Ainsi, le disque 8, muni de sa surface tactile 26, pourrait être porté par un arbre 30 dont la partie inférieure est montée rotative dans un palier 31 tandis que sa partie supérieure, flexible est équipée d'une jauge de contrainte 32 servant à assurer à la fois :

- la détection de l'ordre de déplacement du curseur C,
- la détermination de la vitesse de déplacement du curseur le long de l'axe auquel il se trouve lié.

Dans ce cas, la détection de la position angulaire du disque peut s'effectuer à l'aide d'une roue codeuse 33 et d'un détecteur 34.

Selon un autre mode d'exécution illustré sur la figure 7, l'arbre 35 sur lequel est porté le disque 8 comprend une portion sphérique 36 rotulant dans des coquilles de formes complémentaires 37 solidaires du boîtier. L'extrémité inférieure de l'arbre 35 est alors accouplée à une jauge de contrainte 38 assurant à la fois la détection de l'ordre de déplacement du curseur C, la direction de l'axe Δ lié au curseur et la vitesse de déplacement du curseur C. Dans ce cas, l'orientation de l'axe lié au curseur n'est pas obtenue par une rotation du disque 8 mais par un appui sur le disque dans une zone orientée (par rapport au centre du disque) en correspondance avec l'orientation souhaitée de l'axe lié au curseur.

Des butées 39, 40 peuvent être prévues de manière à limiter le basculement de l'arbre 35.

Bien entendu, les modes d'exécution représentés sur les figures 6 et 7 pourraient être combinés de manière à pouvoir obtenir une orientation grossière de l'axe Δ en exerçant un appui sur le disque 8 puis en assurant un réglage fin de cette orientation en faisant pivoter le disque 8. Dans ce cas, il suffit d'équiper l'arbre 35 (figure 7) d'une roue codeuse associée à un détecteur correspondant.

Comme précédemment mentionné, le procédé selon l'invention peut être utilisé pour commander un défilement multidirectionnel ("scrolling") d'une image représentée partiellement à l'écran.

Dans ce cas, l'écran est utilisé comme une fenêtre au droit de laquelle l'image peut être déplacée.

L'index est, quant à lui, mobile en rotation autour d'un point fixe par rapport à l'écran.

Les figures 8 à 11 illustrent un mode opératoire permettant d'effectuer un défilement de l'image en vue de centrer la portion représentée à l'écran sur un objet déterminé.

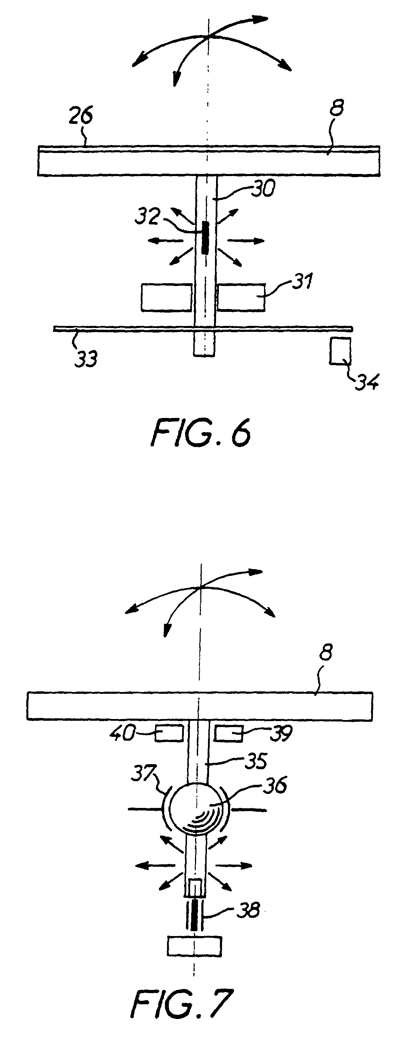

Dans cet exemple, l'image représente un schéma électrique comprenant un double contact $I_1$, $I_2$, et le but du défilement est de disposer ce double contact qui se trouve initialement dans le coin supérieur droit de l'écran (figure 8), au centre de l'écran, comme représenté figure 11.

Pour parvenir à ce résultat, dans un premier temps, l'opérateur pose son doigt sur le disque 8.

La détection de la présence du doigt par la couche sensible fait alors apparaître, au centre de l'écran, un index de sélection de la direction et du sens de déplacement de l'image (figure 9) qui présente la forme d'une flèche F.

L'opérateur provoque alors une rotation du disque 8 de manière à orienter l'index F selon la direction et le sens du déplacement désirés.

Une fois cette orientation atteinte, un appui sur le disque 8 commande le déplacement du schéma selon la direction et le sens indiqués par l'index F (figure 10) jusqu'à ce que le centrage du double interrupteur $I_1$, $I_2$ soit atteint.

En variante, un tel appui pourrait commander le passage du dispositif en mode "déplacement".

Dans ce cas, une rotation du disque 8 dans le sens des aiguilles d'une montre pourrait commander le déplacement de l'image dans le sens indiqué par l'index F, une rotation dans le sens antihoraire commandant alors le déplacement de l'image dans le sens opposé.

Le procédé précédemment décrit s'applique particulièrement bien au tracé d'une route jalonnée par des points de passage "way points" prédéfinis.

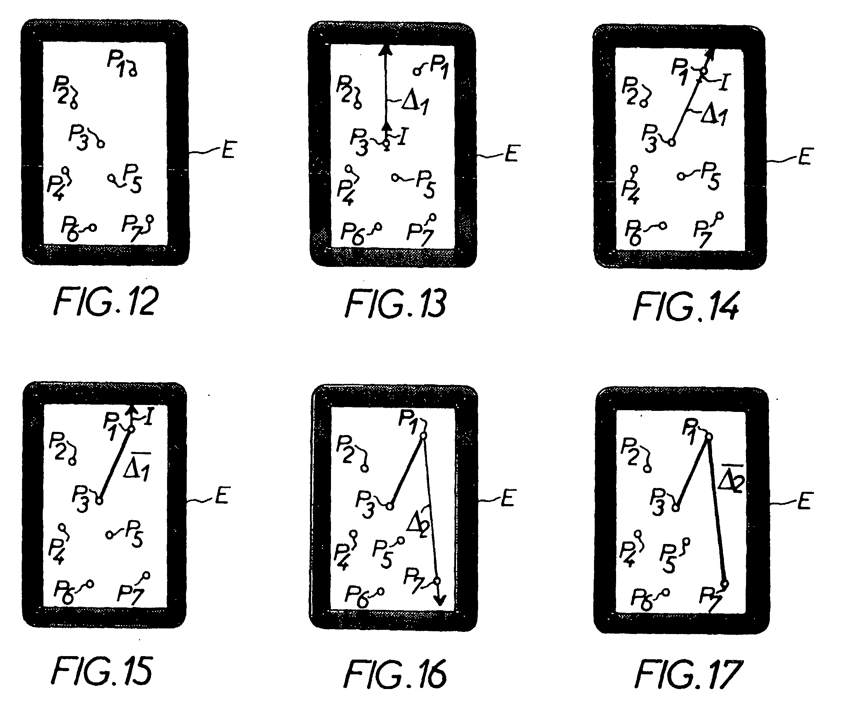

Une telle application se trouve illustrée sur les figures 12 à 17 qui représentent un écran sur lequel un ensemble de points de passage $P_1$ à $P_7$ sont initialement affichés (figure 12).

Pour effectuer le tracé de la route, l'opérateur pose tout d'abord son doigt sur le disque 8 de manière à faire apparaître un index I associé à un axe de balayage $\Delta_1$ (figure 13).

Dans cet exemple, l'index I se trouve initialement centré sur le point $P_3$.

L'opérateur fait alors tourner le disque jusqu'à ce que l'axe de balayage $\Delta_1$ intercepte le premier point désiré (ici, le point $P_1$ sur la figure 14).

L'opérateur appuie alors sur le disque 8 pour tracer le tronçon de route $\bar{\Delta}_1$ entre les deux points $P_3$, $P_1$. Le centre de rotation de l'axe de balayage est alors constitué par le premier point désigné $P_1$ (figure 15).

L'opérateur effectue ensuite une rotation du disque 8 jusqu'à ce que l'axe $\Delta_2$ associé à l'index I intercepte le deuxième point désiré (ici, le point $P_7$ sur la figure 15), puis trace le nouveau tronçon de route $\bar{\Delta}_2$ en exerçant un nouvel appui sur le disque 8 (figure 15).

Ce processus est ensuite répété jusqu'à ce que l'on atteigne le dernier point de passage de la route et qu'on ait tracé le dernier tronçon de la route.

Lorsque le tracé de la route $(\bar{\Delta}_1 + \bar{\Delta}_2 + ...)$ est terminé, l'opérateur peut le valider en exerçant une pression sur une touche de validation ou en exerçant un double appui sur le disque 8.

## Revendications

1. Procédé pour la gestion des déplacements relatifs d'un curseur sur un écran de visualisation, par rapport à une image dont on affiche au moins une partie à l'écran, et ce, en vue d'amener le curseur dans une zone déterminée de cette image, **caractérisé en ce qu'**il comprend un mode de déplacement comportant les étapes suivantes :

   - la détermination et l'indication à l'écran de la direction et du sens du déplacement relatif que l'on veut réaliser, cette étape étant exécutée en faisant varier l'orientation de l'index par une première action de commande manuelle jusqu'à ce qu'elle se trouve dans la direction souhaitée,
   - le déplacement relatif du curseur par rapport à l'image, dans la direction et selon le sens ainsi déterminés jusqu'à ce qu'il parvienne dans ladite zone, ce déplacement étant effectué par une deuxième action de commande distincte de la première,
   - la validation de la position occupée par le curseur relativement à l'image, par une troisième action de commande distincte de la première.

2. Procédé selon la revendication 1, **caractérisé en ce que** la direction que doit emprunter le curseur pour parvenir dans la zone souhaitée de l'image est indiquée par un axe dont le pivotement autour d'un point du curseur est obtenu par la première action de commande manuelle.

3. Procédé selon l'une des revendications 1 et 2, **caractérisé en ce que** le curseur présente la forme d'une flèche indiquant un sens de déplacement, et **en ce que** cette flèche pivote autour de l'un de ses points sous l'effet de la susdite première action de commande.

4. Procédé selon l'une des revendications précédentes, **caractérisé en ce que** la phase de détermination et d'indication à l'écran de la direction et du sens du déplacement relatif que l'on veut réaliser comprend l'affichage d'un axe passant par ledit point de l'index et dont la première action de commande provoque le pivotement autour dudit point.

**5.** Procédé selon l'une des revendications précédentes,
**caractérisé en ce que** l'image affichée à l'écran est fixe, et **en ce que**, dans ce cas, l'index est mobile à la fois en rotation et en translation à la surface de l'écran.

**6.** Procédé selon l'une des revendications 1 à 4,
**caractérisé en ce que** la position du point autour duquel pivote l'index est fixe, et **en ce que**, dans ce cas, l'image est mobile par rapport à l'écran, celui-ci se comportant alors comme une fenêtre en regard de laquelle l'image peut se déplacer selon la direction et le sens indiqués par le curseur.

**7.** Procédé selon l'une des revendications précédentes,
**caractérisé en ce que** la susdite première action de commande consiste en l'entraînement en rotation d'un organe de commande rotatif (8) dont le pivotement entraîne celui du curseur et/ou de l'axe affiché à l'écran.

**8.** Procédé selon l'une des revendications précédentes,
**caractérisé en ce que** les susdites deuxième et troisième actions consistent en des pressions exercées sur ledit organe de commande (8) de manière à l'entraîner en translation, ces pressions présentant des valeurs respectivement inférieure et supérieure à un seuil de pression prédéterminé.

**9.** Procédé selon l'une des revendications 1 à 6,
**caractérisé en ce que** la susdite première action de commande consiste en une pression exercée sur l'organe de commande (8) de manière à provoquer son basculement dans une direction correspondant à celle que doit prendre le susdit axe ($\Delta$).

**10.** Procédé selon la revendication 9,
**caractérisé en ce que** la susdite seconde action consiste à exercer une pression sur ledit organe de commande (8), excédant le susdit seuil.

**11.** Procédé selon l'une des revendications précédentes,
**caractérisé en ce qu'**il comprend en outre la détection de la présence du doigt ou de la main, sur ou à proximité de l'organe de commande (8), cette détection provoquant l'affichage du susdit axe ($\Delta$) et/ou de l'index.

**12.** Procédé selon l'une des revendications 1 à 4 et 6 à 11,
**caractérisé en ce qu'**il s'applique à la commande d'un défilement multidirectionnel d'une image représentée partiellement à l'écran, et **en ce qu'**il comprend la sélection de la direction et du sens de déplacement de l'image par la première action de commande et le déplacement de l'image dans la direction et le sens sélectés par la seconde action de commande jusqu'à l'obtention de la position désirée de l'image affichée à l'écran.

**13.** Procédé selon l'une des revendications 1 à 11,
**caractérisé en ce qu'**il s'applique au tracé d'une route passant par une pluralité de points de passage ($P_1$ à $P_7$) prédéfinis, affichés à l'écran, et **en ce qu'**il comprend en conséquence :

- le positionnement du curseur associé à un axe de balayage ($\Delta$) sur un point de départ,
- la rotation de l'ensemble curseur/axe de balayage par la première action de commande jusqu'à ce que l'axe de balayage ($\Delta_1$) intercepte le premier point de passage désiré ($P_1$),
- le tracé du premier tronçon de route ($\bar{\Delta}_1$) compris entre le point de départ ($P_3$) et le premier point ($P_1$), avec positionnement de l'ensemble curseur/axe de balayage ($\Delta_2$) sur le premier point, cette phase étant obtenue par une conjugaison de la deuxième action et de la phase de validation,
- la rotation de l'ensemble curseur/axe de balayage autour du premier point de passage, grâce à la première action de commande jusqu'à ce que l'axe de balayage ($\Delta_2$) intercepte le deuxième point de passage désiré ($P_7$),
- le tracé du second tronçon ($\bar{\Delta}_2$) compris entre le premier point de passage ($P_2$) et le deuxième point de passage ($P_1$) et le positionnement de l'ensemble curseur/axe de balayage sur le deuxième point de passage ($P_1$),
- la répétition de ce processus jusqu'à ce que le dernier point de passage soit atteint et que le dernier tronçon de route soit tracé,
- la validation de la route ainsi déterminée,

**14.** Dispositif pour la mise en oeuvre du procédé selon l'une des revendications précédentes,
**caractérisé en ce qu'**il comprend :

- un élément de commande (8) monté rotatif sur une structure fixe (4),
- des moyens (15, 16) permettant de détecter la position angulaire de l'élément de commande (8) et d'élaborer un signal numérique représentatif de cette position angulaire,
- un processeur (3) associé à un dispositif d'affichage comprenant un écran (2), ce processeur recevant le susdit signal numérique,
- des moyens permettant d'afficher à l'écran (2) un curseur (C) pouvant pivoter autour de l'un de ses points de manière à indiquer une direction et un sens en correspondance avec la position angulaire de l'élément de commande (8),

- des moyens aptes à détecter une pression exercée sur l'élément de commande (8), et pour transmettre au processeur (3) un signal de commande, lorsque la pression détectée s'élève au-delà d'un seuil prédéterminé,
- des moyens permettant d'effectuer en réponse au signal de commande un déplacement relatif curseur/image selon ladite direction (Δ) et ledit sens,
- des moyens aptes à transmettre au processeur (3) un signal de validation en réponse à une action de l'opérateur sur un organe de validation (13), ce signal de validation déclenchant une prise en compte par le processeur (3) de la position du curseur (C).

15. Dispositif selon la revendication 14,
**caractérisé en ce qu'**il comprend en outre des moyens permettant d'afficher à l'écran (E) un axe (Δ) qui s'étend dans la direction indiquée par le curseur (C) et qui pivote de la même façon autour dudit point, ainsi que des moyens permettant d'effacer ledit axe (Δ) à la suite de l'émission du susdit signal de validation.

16. Dispositif selon la revendication 15,
**caractérisé en ce que** le susdit élément de commande (8) consiste en un disque porté par un axe coaxial (7), axialement mobile contre l'action de moyens élastiques (9) et monté pivotant sur une structure fixe (4), et **en ce que** les moyens de détection de la pression exercée sur l'élément de commande consistent en un interrupteur (17) ou une jauge de contrainte (19) sensible aux déplacements axiaux du susdit arbre (7).

17. Dispositif selon la revendication 16,
**caractérisé en ce que** des moyens permettant de détecter la position angulaire du disque (8) consistent en une roue codeuse (16) portée par le susdit arbre (7) et associée à un détecteur (15).

18. Dispositif selon la revendication 16,
**caractérisé en ce que** le susdit arbre (7) est tubulaire, et **en ce que** les susdits moyens aptes à transmettre au processeur (3) un signal de validation comprennent un poussoir (19) monté coulissant avec rappel par ressort (12) dans une cavité centrale coaxiale du disque (8) et qui est solidaire d'une tige (14) axialement coulissante dans ledit arbre (7), cette tige (14) présentant une extrémité dépassant hors de l'axe, qui coopère avec un interrupteur (18).

19. Dispositif selon l'une des revendications 15 à 18,
**caractérisé en ce qu'**il comprend une pluralité de touches ($T_1$ à $T_4$) disposées autour de l'élément de commande (8).

20. Dispositif selon l'une des revendications 15 à 19,
**caractérisé en ce que** le susdit élément de commande est revêtu d'une couche tactile (26) apte à détecter la présence et/ou le contact d'un doigt de l'opérateur, et à provoquer l'affichage d'un axe (Δ) lié au curseur (C) à la suite d'une détection.

21. Dispositif selon la revendication 15,
**caractérisé en ce que** le susdit élément de commande (8) est porté par un arbre (30) dont la partie inférieure est montée rotative dans un palier (31) tandis que la partie supérieure, flexible est équipée d'une jauge de contrainte (32) pouvant servir à assurer à la fois :

- une détection de l'ordre de déplacement du curseur (C),
- la vitesse de déplacement du curseur (C) le long de l'axe (Δ) auquel il se trouve lié.

22. Dispositif selon la revendication 15,
**caractérisé en ce que** le susdit élément de commande (8) est porté par un arbre (35) articulé sur une structure fixe par l'intermédiaire d'une liaison à rotule (36, 37), et **en ce que** cet arbre (35) est accouplé à une jauge de contrainte (38) assurant à la fois la détection de l'ordre de déplacement du curseur (C), la direction de l'axe (Δ) lié au curseur (C) et la vitesse de déplacement du curseur (C) le long dudit axe (Δ).

23. Dispositif selon la revendication 22,
**caractérisé en ce que** l'arbre (35) est en outre muni d'une roue codeuse associée à un détecteur.

**Claims**

1. A method for managing the relative displacement of a cursor on a viewing screen, in relation to an image of which at least one part is displayed on said screen in order to bring the cursor into a predetermined area of said image,
**characterised in that** it comprises a displacement mode comprising the following stages:

- determination and indication on said screen of the orientation and relative direction of displacement one wishes to obtain, this stage being performed by varying the orientation of the index by a first manual command until it corresponds to the required direction,
- relative displacement of the cursor in relation to said image, according to the orientation and direction thus determined until it reaches said zone, this displacement being performed by a second command distinct from the first one,

- validation of the position occupied by said cursor in relation to said image, by means of a third command distinct from said first one.

2. The method according to claim 1, **characterised in that** the direction to be taken by said cursor to reach the required zone of said image is indicated by an axis of which the pivoting about a point of said cursor is obtained by a first manual command.

3. The method according to one of the claims 1 and 2, **characterised in that** said cursor is in the form of an arrow indicating a direction of displacement, and **in that** said arrow pivots about one of its points under the effect of said first command.

4. The method according to one of the preceding claims, **characterised in that** the stage consisting in the determination and indication on the screen of the orientation and relative direction of displacement to be achieved comprises the displaying of an axis passing through said point of said index and of which said first command causes the pivoting about said point.

5. The method according to one of the preceding claims, **characterised in that** said image displayed on said screen is fixed, and **in that** said index is rotatably and translatably mobile on the surface of said screen.

6. The method according to one of the claims 1 to 4, **characterised in that** the position of said point about which said index pivots is fixed, and **in that**, in this case, said image is mobile in relation to said screen, the latter then acting as a window where the image can be displaced according to the orientation and direction of displacement indicated by said cursor.

7. The method according to one of the preceding claims, **characterised in that** said first command consists in the rotating of a rotary control device (8) of which the pivoting entails a pivoting of said cursor and/or of said axis displayed on said screen.

8. The method according to one of the preceding claims, **characterised in that** said second and third commands consist of pressures exerted on said control device (8) so as to translate it, said pressure having values respectively below and above a predetermined pressure threshold.

9. The method according to one of the claims 1 to 6, **characterised in that** said first command consists of a pressure exerted on said control device (8) so as to cause it to tilt in a direction corresponding to the direction to be taken by said axis ($\Delta$).

10. The method according to claim 9, **characterised in that** said second command consists in exerting a pressure on said control device (8), in excess of said threshold.

11. The method according to one the preceding claims, **characterised in that** it further comprises detection of the presence of a ringer or hand on or in the vicinity of said control device (8), this detection causing said axis ($\Delta$) and/or said index to be displayed.

12. The method according to one of the preceding claims 1 to 4 and 6 toll, **characterised in that** it applies to the controlling of multidirectional scrolling of an image partially represented on said screen, and **in that** it comprises selection of the orientation and direction of displacement by means of the first command, and displacement of said image according to the orientation and direction of displacement selected by said second command until the required position of said image displayed on said screen is obtained.

13. The method according to one of the preceding claims, **characterised in that** it applies to the plotting of a route passing through a plurality of predefined way points displayed on said screen, and consequently comprising:

- the positioning of said cursor associated with a sweeping axis ($\Delta$) on a starting point
- rotation of the cursor / sweeping axis assembly by means of said first command until said sweeping axis ($\Delta_1$) intercepts the first way point required ($P_1$),
- the plotting of the first route section ($\overline{\Delta_1}$) included between said starting point ($P_3$) and the first point ($P_1$), with positioning of said cursor / sweeping axis ($\Delta_2$) assembly on said first point, this stage being obtained by a combination of said second action and the validation stage,
- rotation of said cursor / sweeping axis assembly about said first way point, by means of said first command, until said sweeping axis ($\overline{\Delta_2}$) intercepts the second way point required ($P_7$),
- the plotting of the second section ($\Delta_2$) included between said first way point ($P_2$) and the second way point ($P_1$), and the positioning of said cursor / sweeping axis assembly on said second way point ($P_1$),
- the repeating of this process until the last way point is reached and until the last route section has been plotted,

- validation of the route thus determined.

**14.** A device for implementing the method according to one of the preceding claims, **characterised in that** it comprises:

- a control element (8) mounted rotatably on a fixed structure (4),
- a means (15, 16) enabling detection of the angular position of said control element (8) and elaboration of a digital signal representative of said angular position
- a processor (3) associated with a displaying device comprising a screen (2), said processor receiving said digital signal,
- a means enabling the displaying, on said screen (2), of a cursor (C) capable of pivoting about one of its points so as to indicate an orientation and a direction corresponding to said angular position of said control element (8),
- a means susceptible of detecting pressure exerted on said control element (8), and of transmitting to said processor (3) a control signal, when the pressure exerted exceeds a predetermined threshold,
- a means enabling the performance of relative cursor / image displacement according to said orientation and direction ($\Delta$) in response to said control signal,
- a means susceptible of transmitting, to said processor (3), a validation signal in response to action by the operator on a validation device (13), said validation signal triggering the taking into account of the position of said cursor (C) by said processor (3).

**15.** The device according to claim 14, **characterised in that** it further comprises a means enabling the displaying on said screen (E) of an axis ($\Delta$) extending in the direction indicated by said cursor (C), and which pivots in the same manner about said point, as well as a means enabling said axis ($\Delta$) to be erased subsequent to the transmission of said validation signal.

**16.** The device as claimed in claim 15, **characterised in that** said control element (8) consists of a disk borne by a coaxial axis (7) which is axially mobile against the action of an elastic means (9) and mounted pivotably on a fixed structure (4), and **in that** said means detecting the pressure exerted on said control element consists of a switch (17) or strain gauge (19) sensitive to the axial displacements of said shaft (7).

**17.** The device according to claim 16,

**characterised in that** a means enabling detection of the angular position of said disk (8) consists of a code wheel (16) borne by said shaft (7) and associated with a detector (15).

**18.** The device as claimed in claim 16, **characterised in that** said shaft (7) is tubular, and **in that** said means susceptible of transmitting a validation signal to said processor (3) consists of a thrustor (19) mounted slidably with return action by means of a spring (12) in a central cavity coaxial with said disk (8) and which is integral with a rod (14) sliding axially in said shaft (7), said shaft (14) having an end protruding from said axis, which cooperates with a switch (18).

**19.** The device according to one of the claims 15 to 18, **characterised in that** it comprises a plurality of keys ($T_1$ to $T_4$) arranged around said control element (8).

**20.** The device according to one of the preceding claims, **characterised in that** said control element is covered with a touch-sensitive layer (26) susceptible of detecting the presence and/or the contact of an operator's finger, and of causing the displaying of an axis ($\Delta$) linked to said cursor (C) subsequent to a detection.

**21.** The device according to claim 15, **characterised in that** said control element (8) is borne by a shaft (30) of which the lower part is mounted rotatably in a bearing (31) while the flexible upper part is equipped with a strain gauge (32) serving the following two purposes:

- detection of the order of displacement of said cursor (C),
- determination of the speed of displacement of said cursor (C) along the axis ($\Delta$) to which it is linked.

**22.** The device according to claim 15, **characterised in that** said control element (8) is borne by a shaft (35) articulated on a fixed structure by means of a pivoting pin link (36, 37), and wherein said shaft (35) is coupled to a strain gauge (38) ensuring detection of the order of displacement of said cursor (C), of the direction of the axis ($\Delta$) linked to said cursor (C) and of the speed of displacement of said cursor (C) along said axis ($\Delta$).

**23.** The device according to claim 22, **characterised in that** said (35) shaft is further equipped with a code wheel associated with a detector.

**Patentansprüche**

1. Verfahren für die Verwaltung der relativen Bewegungen eines Cursors auf einem Anzeigebildschirm im Verhältnis zu einem Bild, von dem mindestens ein Teil auf dem Bildschirm angezeigt wird, und dies um den Cursor in eine bestimmte Zone dieses Bildes zu verschieben,
**dadurch gekennzeichnet, dass** es einen Bewegungsmodus beinhaltet, der die folgenden Etappen einschließt:

   - die Bestimmung der Richtung der relativen Bewegung, die ausgeführt werden soll und deren Anzeige auf dem Bildschirm, wobei diese Etappe ausgeführt wird, indem die Orientierung des Zeigers durch eine erste Betätigung der Handsteuerung verändert wird, bis die gewünschte Richtung erreicht ist,
   - die relative Bewegung des Cursors im Verhältnis zum Bild, in der auf diese Weise festgelegten Richtung, bis er in der genannten Zone angelangt ist, wobei diese zweite Bewegung anhand einer zweiten Betätigung der Handsteuerung ausgeführt wird, die sich von der ersten unterscheidet,
   - die Bestätigung der Position, die der Cursor im Verhältnis zum Bild eingenommen hat, durch eine dritte Betätigung der Handsteuerung, die sich von der ersten unterscheidet.

2. Verfahren gemäß Patentanspruch 1,
**dadurch gekennzeichnet, dass** die Richtung, die der Cursor einschlagen muss, um in die gewünschte Zone des Bildes zu gelangen, anhand einer Achse angezeigt wird, deren Drehung um einen Punkt des Cursors herum durch die erste Betätigung der Handsteuerung erreicht wird.

3. Verfahren gemäß einem der Patentansprüche 1 und 2,
**dadurch gekennzeichnet, dass** der Cursor die Form eines Pfeils aufweist, der eine Bewegungsrichtung anzeigt und dass sich dieser Pfeil unter Einwirkung der ersten Betätigung der Handsteuerung um einen seiner Punkte herum dreht.

4. Verfahren gemäß einem der vorangegangenen Patentansprüche,
**dadurch gekennzeichnet, dass** die Phase der Bestimmung und Bildschirmanzeige der relativen Bewegungsrichtung, die eingeschlagen werden soll, die Anzeige einer Achse beinhaltet, die durch den genannten Punkt des Zeigers verläuft, wobei die erste Betätigung der Handsteuerung das Drehen um den genannten Punkt herum bewirkt.

5. Verfahren gemäß einem der vorangegangenen Patentansprüche,
**dadurch gekennzeichnet, dass** das auf dem Bildschirm angezeigte Bild feststehend ist und der Zeiger in diesem Fall im Hinblick auf Rotation und Translation auf der Oberfläche des Bildschirms beweglich ist.

6. Verfahren gemäß einem der Patentansprüche 1 bis 4,
**dadurch gekennzeichnet, dass** die Position des Punktes, um den herum sich der Zeiger bewegt, feststehend ist und in diesem Fall das Bild im Verhältnis zum Bildschirm beweglich ist, wobei sich dieser in diesem Fall wie ein Fenster verhält, im Verhältnis zu dem sich das Bild in der Richtung bewegen kann, die vom Cursor angezeigt wird.

7. Verfahren gemäß einem der vorangegangenen Patentansprüche,
**dadurch gekennzeichnet, dass** die oben genannte erste Betätigung der Handsteuerung darin besteht, ein drehbares Steuerorgan (8) in Rotation zu versetzen, dessen Drehung diejenige des Cursors und/oder der Achse, die auf dem Bildschirm angezeigt wird, nach sich zieht.

8. Verfahren gemäß einem der vorangegangenen Patentansprüche,
**dadurch gekennzeichnet, dass** die oben genannten zweiten und dritten Betätigungen in Druckbetätigungen bestehen, die auf das genannte Steuerorgan (8) ausgeübt werden, um es in eine Translationsbewegung zu versetzen, wobei diese Druckbetätigungen Werte aufweisen, die jeweils unterhalb und oberhalb eines vorgegebenen Druckwertes liegen.

9. Verfahren gemäß einem der Patentansprüche 1 bis 6,
**dadurch gekennzeichnet, dass** die oben genannte erste Betätigung der Handsteuerung in einem Druck besteht, der auf das Steuerorgan (8) ausgeübt wird, um dessen Umschaltung auf eine Richtung zu bewirken, die derjenigen entspricht, die die oben genannte Achse ($\Delta$) einschlagen soll.

10. Verfahren gemäß Patentanspruch 9,
**dadurch gekennzeichnet, dass** die oben genannte zweite Betätigung darin besteht, einen Druck auf das genannte Steuerorgan (8) auszuüben, der über den genannten Schwellenwert hinaus geht.

11. Verfahren gemäß einem der voranstehenden Patentansprüche,
**dadurch gekennzeichnet, dass** es darüber hinaus die Feststellung der Präsenz des Fingers oder der Hand auf oder in der Nähe des Steuerorgans (8) beinhaltet, wobei diese Feststellung die Anzeige

der genannten Achse (∆) und/oder des Zeigers nach sich zieht.

**12.** Verfahren gemäß einem der Patentansprüche 1 bis 4 und 6 bis 11, **dadurch gekennzeichnet, dass** es auf die Steuerung einer multidirektionalen Ablaufbewegung eines Bildes angewendet wird, das teilweise auf dem Bildschirm dargestellt wird und dass es die Wahl der Bildverschiebungsrichtung durch die erste Betätigung der Handsteuerung und die Bewegung des Bildes in der gewählten Richtung durch die zweite Betätigung der Handsteuerung beinhaltet, bis die gewünschte Position des auf dem Bildschirm angezeigten Bildes erreicht ist.

**13.** Verfahren gemäß einem der Patentansprüche 1 bis 11, **dadurch gekennzeichnet, dass** es auf die Streckenführung eines Weges angewendet wird, der durch eine Vielzahl von vorgegebenen Wegpunkten (P1 bis P7) verläuft, die auf dem Bildschirm angezeigt werden und infolgedessen folgendes beinhaltet:

- die Positionierung des Cursors, der einer Abtastachse (∆) zugeordnet ist, auf einem Ausgangspunkt,
- die Rotation der Einheit aus Cursor / Abtastachse durch die erste Betätigung der Handsteuerung, bis die Abtastachse (∆1) den ersten gewünschten Wegpunkt (P1) erfasst,
- die Festlegung des ersten Streckenabschnitts (∆1) zwischen dem Ausgangspunkt (P3) und dem ersten Wegpunkt (P1) mit Positionierung der Einheit aus Cursor / Abtastachse (A2) auf dem ersten Punkt, wobei diese Phase durch eine Verbindung aus der zweiten Betätigungsaktion und der Bestätigungsphase erreicht wird.
- die Rotation der Einheit aus Cursor / Abtastachse um den ersten Wegpunkt herum, dank der ersten Betätigung der Handsteuerung, bis die Abtastachse (∆2) den zweiten gewünschten Wegpunkt erfasst,
- die Festlegung des zweiten Streckenabschnitts (∆2) zwischen dem ersten Wegpunkt (P2) und dem zweiten Wegpunkt (P1), mit Positionierung der Einheit aus Cursor / Abtastachse auf dem zweiten Wegpunkt (P1),
- die Wiederholung dieses Verfahrens, bis der letzte Wegpunkt erreicht und der letzte Abschnitt der Wegstrecke festgelegt worden ist,
- die Bestätigung der auf diese Weise festgelegten Wegstrecke.

**14.** Vorrichtung für die Verwendung des Verfahrens gemäß einem der voranstehenden Patentansprüche, **dadurch gekennzeichnet, dass** es folgendes beinhaltet:

- ein Steuerelement (8), das rotierend auf einer feststehenden Struktur (4) montiert ist,
- Mittel (15, 16) für die Bestimmung der Winkelposition des Steuerelements (8) und die Erstellung eines digitalen Signals, das dieser Winkelposition entspricht,
- einen Prozessor (3), der einer Anzeigevorrichtung zugeordnet ist, die einen Bildschirm (2) beinhaltet, wobei dieser Prozessor das oben genannte digitale Signal empfängt,
- Mittel für die Anzeige eines Cursors (C) auf dem Bildschirm (2), wobei sich dieser Cursor (C) um einen seiner Punkte drehen kann, um eine Richtung anzuzeigen, die mit der Winkelposition des Steuerelements (8) übereinstimmt,
- geeignete Mittel, um einen Druck festzustellen, der auf das Steuerelement (8) ausgeübt wird und ein Steuersignal an den Prozessor (3) zu übermitteln, wenn der festgestellte Druck über einem vorgegebenen Schwellenwert liegt,
- Mittel, mit denen sich als Reaktion auf das Steuersignal eine relative Bewegung von Cursor / Bild in der genannten Richtung (∆) vollziehen lässt,
- geeignete Mittel, um an den Prozessor (3) ein Bestätigungssignal zu übertragen, als Reaktion auf eine Einwirkung des Bedieners auf ein Bestätigungsorgan (13), wobei dieses Bestätigungssignal eine Berücksichtigung der Position des Cursors (C) durch den Prozessor auslöst.

**15.** Vorrichtung gemäß Patentanspruch 14, **dadurch gekennzeichnet, dass** sie daneben Mittel beinhaltet, mit denen sich eine Achse (∆) auf dem Bildschirm (E) anzeigen lässt, die sich in der vom Cursor (C) angegebenen Richtung erstreckt und die sich in der gleichen Weise um den genannten Punkt herum dreht, sowie Mittel, mit denen sich die genannte Achse (∆) infolge der Aussendung des genannten Bestätigungssignals löschen lässt.

**16.** Vorrichtung gemäß Patentanspruch 15, **dadurch gekennzeichnet, dass** das genannte Steuerelement (8) aus einer Scheibe besteht, die von einer koaxialen Achse (7) getragen wird, die im Hinblick auf die Einwirkung auf elastische Mittel (9) beweglich gelagert und drehbar auf einer feststehenden Struktur (4) montiert ist, und dass die Mittel für die Feststellung des Drucks, der auf das Steuerelement (8) ausgeübt wird, aus einem Schalter (17) oder einem Dehnungsmessstreifen (19) bestehen, der im Hinblick auf die axialen Bewegungen der genannten Welle (7) empfindlich ist.

**17.** Vorrichtung gemäß Patentanspruch 16, **dadurch gekennzeichnet, dass** die Mittel für die Feststellung der Winkelposition der Scheibe (8) aus einem Codierrad (16) bestehen, das auf der genannten Welle (7) sitzt und einem Sensor (15) zugeordnet ist.

**18.** Vorrichtung gemäß Patentanspruch 16, **dadurch gekennzeichnet, dass** die genannte Welle (7) die Form einer Röhre besitzt und die genannten geeigneten Mittel für die Übertragung eines Bestätigungssignals an den Prozessor (3) einen Schaltknopf (19) beinhalten, der verschiebbar mit Rückholfeder (12) in einer zentralen, koaxialen Vertiefung der Scheibe (8) montiert ist und fest mit einem Stab (14) verbunden ist, der verschiebbar in der genannten Welle (7) gelagert ist, wobei dieser Stab (14) ein Ende aufweist, das über die Achse hinausreicht und mit einem Schalter (18) zusammenwirkt.

**19.** Vorrichtung gemäß einem der Patentansprüche 15 bis 19, **dadurch gekennzeichnet, dass** sie eine Mehrzahl von Tasten (T1 bis T4) beinhaltet, die um das Steuerelement (8) herum angeordnet sind.

**20.** Vorrichtung gemäß einem der Patentansprüche 15, bis 19, **dadurch gekennzeichnet, dass** das oben genannte Steuerelement mit einer berührungsempfindlichen Schicht (26) beschichtet ist, die in der Lage ist, die Präsenz und/oder den Kontakt eines Fingers des Bedieners festzustellen und die Anzeige einer Achse (Δ), die mit dem Cursor (C) verbunden ist, infolge einer solchen Präsenzfeststellung zu bewirken.

**21.** Vorrichtung gemäß Patentanspruch 15, **dadurch gekennzeichnet, dass** das oben genannte Steuerelement (8) von einer Welle (30) getragen wird, deren unterer Teil rotierend in einem Lager (31) montiert ist, während der flexible obere Teil mit einem Dehnungsmessstreifen (32) ausgerüstet ist, der gleichermaßen die folgenden Funktionen erfüllen kann:

- Feststellung der Bewegungsanweisung für den Cursor (C),
- Bewegungsgeschwindigkeit des Cursors (C) entlang der Achse (Δ), mit der er verbunden ist.

**22.** Vorrichtung gemäß Patentanspruch 15, **dadurch gekennzeichnet, dass** das genannte Steuerelement (8) von einer Welle (35) getragen wird, die gelenkig auf einer Struktur gelagert ist, die anhand einer Kugelgelenkverbindung (36, 37) befestigt ist, und diese Welle (35) mit einem Dehnungsmessstreifen (38) gekoppelt ist, der gleichermaßen die Feststellung der Bewegungsanweisung für den Cursor (C), die Richtung der Achse (Δ), die mit dem Cursor (C) verbunden ist und die Geschwindigkeit des Cursors (C) entlang der genannten Achse (Δ) gewährleistet.

**23.** Vorrichtung gemäß Patentanspruch 22, **dadurch gekennzeichnet, dass** die Welle (35) darüber hinaus mit einem Codierrad ausgerüstet ist, das einem Sensor zugeordnet ist.

FIG.1

FIG.2

FIG.3

FIG.4

FIG.5

FIG.8

FIG.9

FIG.10

FIG.11

FIG. 6

FIG. 7

FIG.14

FIG.17

FIG.13

FIG.16

FIG.12

FIG.15